# EUROPEAN PATENT APPLICATION

(11) **EP 3 832 570 A1**
(43) Date of publication of application: **09.06.2021**
(21) Application number: 19213915.2
(22) Date of filing: 05.12.2019
(51) Int. Cl.: G06Q 10/10, H04N 7/15, H04L 29/06, G11B 27/031

(54) **COMPUTER-IMPLEMENTED METHOD OF PERFORMING A REAL-TIME ONLINE COMMUNICATION AND COLLABORATION SESSION, A COMMUNICATION SYSTEM, AND AN ON-SCREEN PRESENTATION TOOL**

(71) Applicant: Unify Patente GmbH & Co. KG, 81739 München (DE)
(72) Inventor: Zeiner, Johann, 85757 Karlsfeld (DE)
(74) Representative: Pösentrup, Judith

(57) **Abstract**

The present invention relates to a computer-implemented method of performing a real-time online communication and collaboration session on a communication and collaboration platform on which a plurality of clients (8, 9) and a media server (16) are connected to each other via a communication network, wherein the communication and collaboration session comprises an on-screen presentation (5) provided by a first client (8) and to be shared with at least a second client (9) of the plurality of clients, the on-screen presentation (5) being prepared on a template (2) comprising a set of predefined colors and at least one predefined video frame (1) comprising a unique predefined color that is different from the colors of the set of predefined colors, the method comprising the steps of receiving, at the media server (16), a first data stream (12) from the first client (8), the first data stream (12) being representative of the on-screen presentation (5); receiving, at the media server (16), at least one second data stream (11), the second data stream (11) comprising image or video data; searching, at the media server (16), the first data stream (12) for the predefined video frame (1); replacing the predefined video frame (1) in the first data stream (12) by the second data stream (11), this producing a resulting data stream (13), and transmitting the resulting data stream (13) at least to the second client (9) of the plurality of clients. Further, the present invention relates to a communication system (7) comprising a media server (16), wherein the media server (16) is adapted so as to carry out the method of performing a real-time online communication and collaboration session. Moreover, the present invention relates to an on-screen presentation tool for preparing an on-screen presentation (5) to be shared by a first client (8) on a communication and collaboration platform with at least a second client (9) in a real-time online communication and collaboration session, the on-screen presentation tool comprising a presentation template (2) comprising a predefined set of colors and at least one video chroma key frame (1) within the presentation template (2).

## Description

The present invention relates to a computer-implemented method of performing a real-time online communication and collaboration session, a communication system, and an on-screen presentation tool.

Modern communication is multi-modal. In prior art, for example, communication systems are known which allow for real-time collaboration on an enterprise real-time collaboration platform which is configured so as to process and transmit multiple media streams in parallel. For example, vivid virtual presentations often comprise an on-screen presentation accompanied by a live transmission of speech and video of the presenter. For example, a person providing a real-time online presentation may want to introduce himself or may want to accompany the presentation, by some personal gestures or the like by means of a live video.

Thus, several information streams are created, which are running in parallel in real-time. However, in prior art solutions, the presenter has no opportunity to link his or her on-screen presentation to the video image or images such that a direct relation between the image and the presentation is achieved.

As a result, a holistic presentation as it would be provided in a personal real presentation cannot be provided to the audiences, because mostly, only a part is transmitted, for example, either the on-screen presentation or the video, or the latter are displayed on two different screens. However, the auditor is only able to focus on one single information channel, but the presenter has no possibility to link the various media so as to convey the correctly correlated context to the auditor.

On the other hand, known methods for embedding video streams recorded by a video camera into a screen, are rather complicated and not easy to use. For example, local PC applications, as OBS Studio allow for the arrangement of a scene such that a live video of a camera may be inserted at various locations on the screen. The operation of these PC applications, however, requires a lot of user expertise, and thus, for an average user, it is not feasible to use, for example, OBS Studio in a live online collaboration and communication session on a communication platform.

Also, video mixer are known in prior art that allow for the superimposition of several image sources such that a similar effect is obtained. But also here, profound knowledge of how to use these techniques and devices is required.

Therefore, in prior art, the problem exists that there are no means or tools available to a user who wants to provide a shared online on-screen presentation augmented with a video of himself or herself which enable easy linking of various media of a live presentation in such a manner that the audience gains a holistic view of the context.

Therefore, the present invention is based on the object to provide a computer-implemented method of performing a real-time online communication and collaboration session on a communication and collaboration platform and a corresponding communication system which enable a user to easily link a shared on-screen presentation to a live video or other images that are useful for accompanying the presentation.

This object is solved according to the present invention by a computer-implemented method of performing a real-time online communication and collaboration session having the features according to claim 1, a communication system having the features according to claim 10, and on-screen presentation tool for preparing an on-screen presentation having the features according to claim 11. Preferred embodiments of the invention are specified in the respective dependent claims.

According to the present invention, a computer-implemented method of performing a real-time online communication and collaboration session on a communication and collaboration platform on which a plurality of clients and a media server are connected to each other via a communication network is provided, wherein the communication and collaboration session comprises an on-screen presentation provided by a first client and to be shared with at least a second client of the plurality of clients, the on-screen presentation being prepared on a template comprising a set of predefined colors and at least one predefined video frame comprising a unique predefined color that is different from the colors of the set of predefined colors, the method comprising the steps of receiving, at the media server, a first data stream from the first client, the first data stream being representative of the on-screen presentation; receiving, at the media server, at least one second data stream , the second data stream comprising image or video data; searching, at the media server, the first data stream for the predefined video frame; replacing the predefined video frame in the first data stream by the second data stream, this producing a resulting data stream, and transmitting the resulting data stream at least to the second client of the plurality of clients.

According to a preferred embodiment of the invention, the first data stream and the at least one second data stream are received at the media server in parallel.

According to another preferred embodiment of the invention, the predefined video frame is representative of a rectangular box.

According to still another preferred embodiment of the invention, the video data of the second data stream is derived from a live video recording at a camera at the first client or in vicinity of the first client.

Preferably, the live video is a video showing a first user who is the presenter of the on-screen presentation.

Also, the steps of searching the first data stream for the predefined video frame and replacing the predefined video frame by the second data stream may be carried out using a library of programming functions, in particular, OpenCV, which is configured to detect geometrical shapes or designs, in particular, the rectangular box.

Preferably, after the step of searching and replacing the predefined video frame, the method further comprises a step of adapting the bitrate of the screen share to the requirements of the resulting data stream.

According to still another preferred embodiment of the invention, the step of adapting the bitrate of the screen share is carried out by a Selective Forwarding Unit, SFU, of the media server.

Moreover, it is very preferable, if the predefined video frame is a video chroma key frame allowing the user at the first client to control the embedding of the video data into the on-screen presentation.

Further, according to the present invention, a communication system is provided comprising a media server, wherein the media server is adapted so as to carry out the method of performing a real-time online communication and collaboration session according to any one of the preceding claims.

Also, according to the present invention, an on-screen presentation tool for preparing an on-screen presentation to be shared by a first client on a communication and collaboration platform with at least a second client in a real-time online communication and collaboration session is provided, the on-screen presentation tool comprising a presentation template comprising a predefined set of colors and at least one video chroma key frame within the presentation template.

Thus, the inventive solution is very simple. Video chroma key frames are incorporated into presentation templates, like e.g., PowerPoint or the like, using a complementary color scheme which is not used in the template which enable video data to be embedded into the presentation during a live collaboration session very easily. The user or presenter may, without any specific technical knowledge or insight of chroma keying, create presentation foils or slides to be shared amongst a plurality of users into which his or her own live video or other additional images are embedded. For example, a user providing a shared virtual presentation to a plurality of remotely located users may introduce himself or herself at the beginning of the presentation, may illustrate certain aspects by examples or demos during the presentation, or may give some concluding remarks at the end of the presentation. The introduction of the inventive feature allows embedding of a live video source or sources into a presentation template in a very easy and user-friendly manner. The user is able to control the presentation and the accompanying video in a targeted manner without additional expertise being required.

The invention and embodiments thereof will be described below in further detail in connection with the drawing.
- Fig. 1: schematically illustrates the use of a video frame in a presentation according to an embodiment of the invention; and
- Fig. 2: schematically illustrates a communication system according to an embodiment of the invention.

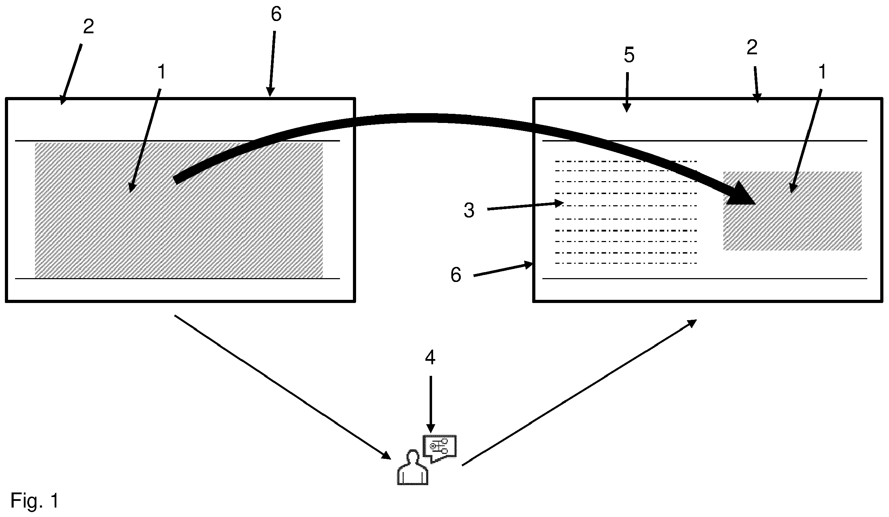

Fig. 1 schematically illustrates the use of a video frame 1 in a template 2 used for preparing a presentation according to an embodiment of the invention. First of all, it is noted that nowadays, in enterprise communication, corporate identity and corporate design is an important feature. Thus, many companies have brand designs, which also dictate the design of the presentations and the templates used for the latter, respectively, concerning, for example, standardized color, font, etc. However, since the use of colors, thereby, is reduced or limited to a specific allowed set of colors, the use of one or more chroma keys for the targeted control of live video images of the presenter or user 4 within his or her on-screen presentation 5 is particularly easily enabled.

For example, an enterprise or company may provide a template 2 for presentations, for example, PowerPoint presentations (any other software applicable for such presentations may just as well be implemented), as illustrated in Fig. 1, which comprises one or more rectangular field/fields that may be used as video frame/frames 1, to which the presenter may add a live video of himself or herself, whereby the video frame 1 has a color that is different from the colors of the specific allowed set of colors used for the corporate brand design. It is noted that in the figures, since only black and white coloration may be used, the frame 1 is filled with a hatching that is intended to represent a distinct color.

If there is more than one camera that records live video images, then there is one video frame 1 for every camera provided, linked thereto, and having a different color. For example, a video frame 1 for inserting video data of a first camera may have a pink color (as noted above, indicated here by the hatching), and another video frame for inserting video data of a second camera may have a purple color (not shown=. In any case, the colors used for the video frames 1 must be distinct from the colors used in the template 2 for the corporate brand. The frame 1 does not necessarily have to be used for adding video data derived from a video camera thereto. Also other presentation sources are conceivable, for example, images or demos or the like may be inserted into the video chroma key frame 1. The presenter, however, thereby is able to add, for example, his own live video during the presentation to the rectangular field representing the video chroma key frame 1, for rendering his presentation more vivid and thus, more interesting and possible also more comprehensible to the audience. The video frame 1 may be placed at any arbitrary position on the template 2, as this can be seen in Fig. 1 on the right hand side, where the frame covers the right side of the template to which the individual content 3 of a user 4 has been added. As can be seen, the content of the presentation thus is directly linked to the live video of the presenter 4 added to the video frame 1 on one and the same screen 6 and the presenter or user 4 does not need to have specific expertise for adding the video to the presentation. The realization of such a combined screen comprising presentation content 3 and live video data is possible with commonly known means of presentation technology.

For transmitting the presentation to the other users, the user or presenter 4 may use a communication system or platform or tool, as Circuit of Unify, Skype for Business, or Cisco WebEx, or the like. It only is important that the tool used allows for several communication channels being available between the user or presenter 4 and the other users or audience. Namely, the tool or communication system should be able to transmit audio and/or video data streams, and it should be configured so as to enable screen sharing. The auditor may generally select, which channel he or she would like to follow or, in case that there are several screes or one large screen, may be able to distribute the channels free on the screen or screens.

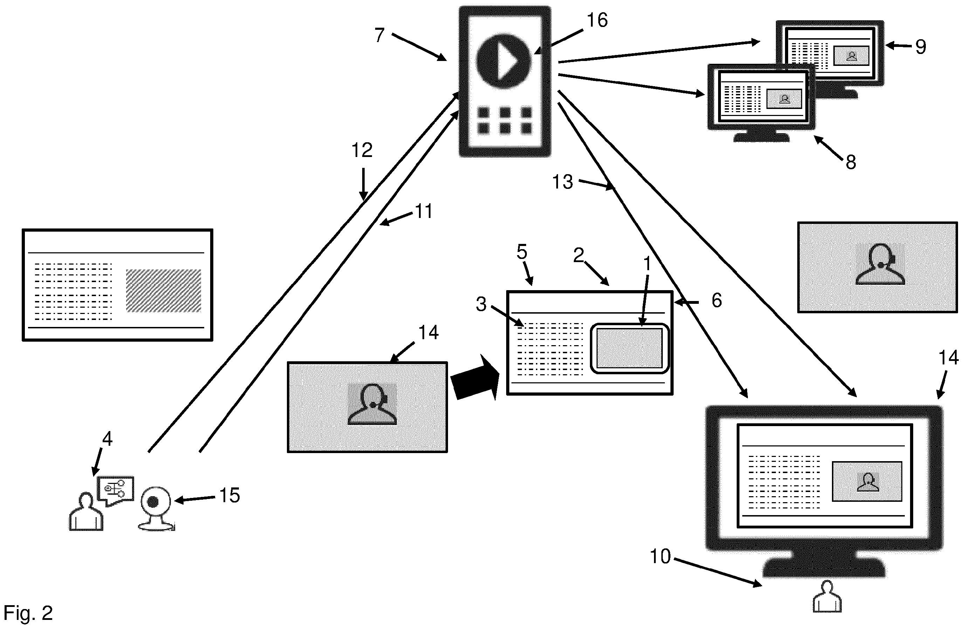

Fig. 2 schematically illustrates a communication system 7 according to an embodiment of the invention. It is noted that here, again, instead of the intended coloration, grey color and hatching is used instead.

The communication system 7 illustrated in Fig. 2 comprises a media server 16 to which a first client 8 used by the user or presenter 4 and a second client 9 used by a participant or second user 10 of the real-time online communication and collaboration session in which the presentation of the user 4 is shared are connected. The communication system 7, for providing the above mentioned feature of adding a live video to a presentation, is extended so as to be able to analyze the incoming video stream for screen sharing, and so as to identify the video frame 1. This may, for example, be simply realized by using libraries, as OpenCV, that provide functions for detecting and recognizing geometrical shapes, as a rectangle or the like, and which are able to replace this placeholder by the actual video or other image data. If the video frame 1 is detected and recognized, then transmission modalities need to be changed, too. On the one hand, the video source provided by the user or presenter 4 transmitted in parallel (as a second data stream) to the presentation (as a first data stream) has to be inserted at the predetermined or preset position. At the same time, the bitrate of the screen share has to be adapted so as to meet the needs of the increased bandwidth requirements of the embedded video in the thus derived resulting data stream 13 that is transmitted to the second client 9 so as to be displayed on a screen 14 to the second user 10.

As can be seen here, the on-screen presentation 5 prepared by the presenter 4 specifies, by means of the video frame 1 on the enterprise's template 2, the position and size of the live video image 14 recorded by a camera 15 located close to the first client 8 and its user 4. Thereby, the user 4, for example, at the beginning of his or her presentations, greet the other participants personally and may introduce himself or herself to the other participants. Further, during the presentation, the user 4 may also provide additional arguments on the presentation foils using the video frame 1, or he or she may substantiate the content presented by means of examples using the video frame 1.

By using the predefined format in the template, for example, an enterprise's template, the user or presenter 4 does only need basic skills with respect to the presentation tool (for example, PowerPoint) to add the content and the video or image data during the presentation.

The recipient of the screen shared by the user or presenter 4, namely, the recipient of the resulting data stream 13 comprising the video data and the presentation, does not need to use specific equipment. Any display device for displaying the presentation in the template 2 with the embedded frame 1 may be used for this purpose. Thus, any arbitrary device may be used comprising a display device, for example, a smartphone, a tablet, or the like.

It should be noted that the use of the video place holder, namely, the video frame 1 is not limited to a presentation tool, but rather may be inserted at any arbitrary position on a screen. This may be, for example, the desktop of a PC, or a whiteboard. For example, a person that is currently active at the whiteboard may be shown here, too.

Summarizing the above, the present invention comprises a enterprise-wide definition of chroma keys for video images, and the embedding of the virtual video window into the template for on-screen presentations. The communication or transmission system needs to the configured with the predefined video chroma key, and the presentation has to be created using the predefined chroma key. The transmission system or communication system, in particular, the media server searches the preconfigured field, namely, the video frame 1 within the template 2 used for the presentation, and inserts the video of the presenter into this frame or field. As the presentation may be recorded, the recording will comprise both, the presentation together with the video data.

By means of the communication system described above and the corresponding method, the audience may be provided with a holistic presentation.

### Reference numerals

- 1: video frame
- 2: template
- 3: content
- 4: user / presenter
- 5: on-screen presentation
- 6: screen
- 7: communication system
- 8: first client
- 9: second client
- 10: second user or participant
- 11: second data stream
- 12: first data stream
- 13: resulting data stream
- 14: video image
- 15: camera
- 16: media server

## Claims

1. Computer-implemented method of performing a real-time online communication and collaboration session on a communication and collaboration platform on which a plurality of clients (8, 9) and a media server (16) are connected to each other via a communication network, wherein the communication and collaboration session comprises an on-screen presentation (5) provided by a first client (8) and to be shared with at least a second client (9) of the plurality of clients, the on-screen presentation (5) being prepared on a template (2) comprising a set of predefined colors and at least one predefined video frame (1) comprising a unique predefined color that is different from the colors of the set of predefined colors, the method comprising the steps of
- receiving, at the media server (16), a first data stream (12) from the first client (8), the first data stream (12) being representative of the on-screen presentation (5);
- receiving, at the media server (16), at least one second data stream (11), the second data stream (11) comprising image or video data;
- searching, at the media server (16), the first data stream (12) for the predefined video frame (1);
- replacing the predefined video frame (1) in the first data stream (12) by the second data stream (11), this producing a resulting data stream (13),
- transmitting the resulting data stream (13) at least to the second client (9) of the plurality of clients.

2. Method according to claim 1, wherein the first data stream (11) and the at least one second data stream (12) are received at the media server (16) in parallel.

3. Method according to claim 1 or claim 2, wherein the predefined video frame (1) is representative of a rectangular box.

4. Method according to any one of the preceding claims, wherein the video data of the second data stream (11) is derived from a live video recording at a camera (15) at the first client (9) or in vicinity of the first client (8).

5. Method according to claim 4, wherein the live video is a video showing a first user (4) who is the presenter of the on-screen presentation (5).

6. Method according to any one of claims 3 or 4, wherein the steps of searching the first data stream (12) for the predefined video frame (1) and replacing the predefined video frame (1) by the second data stream (11) is carried out using a library of programming functions, in particular, OpenCV, which is configured to detect geometrical shapes or designs, in particular, the rectangular box.

7. Method according to any one of the preceding claims, wherein after the step of searching and replacing the predefined video frame (1), the method further comprises a step of adapting the bitrate of the screen share to the requirements of the resulting data stream (13).

8. Method according to claim 7, wherein the step of adapting the bitrate of the screen share is carried out by a Selective Forwarding Unit, SFU, of the media server (16).

9. Method according to any one of the preceding claims, wherein the predefined video frame (1) is a video chroma key frame allowing the user (4) at the first client (8) to control the embedding of the video data into the on-screen presentation (5).

10. Communication system (7) comprising a media server (16), wherein the media server (16) is adapted so as to carry out the method of performing a real-time online communication and collaboration session according to any one of the preceding claims.

11. On-screen presentation tool for preparing an on-screen presentation (5) to be shared by a first client (8) on a communication and collaboration platform with at least a second client (9) in a real-time online communication and collaboration session, the on-screen presentation tool comprising a presentation template (2) comprising a predefined set of colors and at least one video chroma key frame (1) within the presentation template (2).
